# EUROPEAN PATENT SPECIFICATION

(11) **EP 0 352 727 B1**
(45) Date of publication and mention of the grant of the patent: **05.01.1994**
(21) Application number: 89113683.0
(22) Date of filing: 25.07.1989
(51) Int. Cl.: B01D 19/00, B01D 1/22, C08F 6/10, F28F 1/32

(54) **Process for the devolatilization of polymer solutions**
Verfahren zur Entgasung von Polymerlösungen
Procédé pour le dégazage de solutions polymères

(30) Priority: 26.07.1988 IT 2148188
(43) Date of publication of application: 31.01.1990
(73) Proprietor: ENICHEM S.p.A., 20124 Milano (IT)
(72) Inventor: Mattiussi, Andrea, I-20149 Milan (IT); Buonerba, Claudio, I-46100 Mantova (IT); Balestri, Franco, I-46100 Mantova (IT); Dall'Acqua, Dino, I-30172 Mestre Venezia (IT); Matarrese, Savino, I-37138 Verona (IT); Borghi, Italo, I-44100 Ferrara (IT)
(74) Representative: Weinhold, Peter, Dr.

(56) References cited:
- EP-A- 0 226 204
- US-A- 4 153 501

## Description

The present invention relates to a method for removing the volatile components from polymer solutions.

More particularly, the present invention relates to a method for removing the volatile components from polymer solutions of high viscosity by indirect heating.

The removal of volatile components from very viscous polymer solutions is an operation which often recurs in the production of many polymers. In particular, in the mass or solution polymerization of ethylenically unsaturated monomers and in the polymerization by polycondensation, the removal of the remaining monomers, of the solvent and of other volatile materials from the solution containing the polymer is a necessary operation.

As is known, the separation of the polymer from the volatile components is generally achieved by evaporation, consisting in heating the polymer solution to a temperature higher than the boiling point of the volatile components. The methods and apparatus used for this purpose can be categorized as a function of the viscosity of the polymer solution. When the polymer solution is fluid, i.e., its viscosity is below 10³ Ns/m² (10⁶ centipoise), a thin layer evaporator can be used, in which the solution is heated while flowing along the inner surface of the evaporator.

A blade rotor serves to spread and move the solution to be treated forward along the devolatizer walls.

However, by using these types of devolatizers, one cannot achieve a very thorough removal of the volatile substances unless an apparatus of large volume is used which, in turn, results in high costs of operation,owing to the required energy.

Moreover, said thin layer evaporators exert considerable shear forces on the polymer and sometimes they may cause a deterioration of the physical properties.

For more viscous solutions such as, for instance, solutions having a viscosity above 10³ Ns/m² (10⁶ centipoise), devolatilization can be achieved by means of ventilated extruders. These extruders, however, give rise to high costs of operation, besides necessitating considerable initial investments. Moreover, also by using such a type of apparatus the thermodegradation of the polymer cannot be avoided completely.

This is mainly due to the fact that degradation of the materials occurs, resulting from the high viscosity-dissipation and/or the long residence time of the fluid to be treated in the evaporator.

Applicant's various attempts at overcoming this drawback, by increasing or by lowering the temperature of treatment, did not lead to any satisfactory results: a temperature increase in the treatment chamber leads to a more significant thermal degradation of the materials whereas a lowering of the temperature results in an increase in the fluid viscosity and, associated therewith, a more pronounced mechanical degradation.

In fact, as known, the degradation of thermosensitive materials depends on the residence time in the treatment chamber, the mechanical energy dissipation and the treatment temperature, as described in Polymer Engineering and Science, August 1978, Vol. 18, No. 10, pages 812-816.

Methods and apparatus for the devolatilization of polymer solutions by indirect heating are also known. These methods are often independent of the polymer viscosity but they are not free from drawbacks and limitations as well.

The polymer solutions very often are subjected to high temperatures for prolonged periods of time, which causes undesirable degradation of the polymer, particularly if the latter is very sensitive to heat, such as, for instance, polystyrene or copolymers or mixtures thereof. This degradation involves a discoloration and/or a degradation of the physico-chemical properties of the polymer, e.g. its toughness. To overcome these drawbacks, it has been proposed to subject the solution to intermediate temperatures, prolonging the residence time in the zone of indirect heating. Where this is possible the drawbacks are either a low productivity due to the low flow rate through the zone of thermal exchange or the need to use very large and, consequently, very expensive apparatus.

US-A-4,153,501 describes a method and the respective apparatus for removing the vaporizable components from the melt of thermoplastic materials by heating gently in a tubular heat exchanger. This method requires a large zone of indirect heat exchange, which adds to the initial costs and the costs of operation.

EP-A-226 204 describes a method for removing the volatile components from a polymer solution containing at least 25% by weight of polymers, comprising:
a) passing the polymer solution through a zone of indirect thermal exchange, said zone comprising a plurality of channels having a substantially uniform ratio surface volume in the range of from 4 to 50, being from 0.127 to 1.27cm (0.05 to 0.5 inches) high and from 1.27 to 30.48cm (0.5 to 12 inches) long , wherein the polymer solution is heated under pressure at a temperature which is above the vaporization temperatures of the volatile components and is below the boiling point of the polymer in the solution;
b) evaporating at least 25% of the volatile components of the polymer solution after it has left the zone of indirect thermal exchange; and
c) separating the volatile components evaporated from the solution of the devolatilized polymer.

The pressure generally range from 19.6 · 10⁴ to 19.6 · 10⁶ Pa (2 to 200 atmospheres) and the temperature is 160 to 330°C.

This process avoids the thermal degradation of the polymer since it lowers the exposure time of the polymer in the solution at the devolatilization temperature. However, it is not completely satisfactory, as it does not allow to achieve a complete devolatilization of the volatile components from the solution, and therefore it requires more than one devolatilization step.

Moreover, the great temperature difference between the wall of the heat exchanger and the polymer solution causes both a non-uniform distribution of the solution in the individual parallel channels with consequent dishomogeneity in the temperature distribution and a non-uniform treatment of the polymer in each channel, as reported by Scott Lynn and Charles F. Oldershaw - Analysis and Design for Viscous Flow Cooler Heat Transfer Engineering - Vol. 5 No. 1-2-1984.

Therefore, an object of the present invention is to provide a process which allows a nearly complete removal of the volatile components from polymer solutions without the above drawbacks.

More particularly, an object of the present invention is to provide a more efficient process for removing, in a nearly complete way, the volatile components from polymer solutions without causing a significant decay of the properties of the polymer.

It has now surprisingly been found that the above objects can be achieved by carrying out the devolatilization process under conditions which allow to achieve a difference of less than 10°C between the temperature of the heating medium and the temperature of the polymer solution leaving the channels as well as a pressure of the polymer solution in the zone of devolatilization at the inlet of the channels ranging from 2 to 5 · 10⁵ Pascal.

Therefore, object of the present invention is a process for the devolatilization of polymer solutions, comprising the steps of:
a) feeding the polymer solution through a zone of indirect heat exchange, said zone comprising a plurality of parallel channels heated to a temperature higher than the vaporization temperature of the volatile components and up to the boiling point of the solution;
b) passing the polymer solution through each channel;
c) keeping the polymer solution in each channel for a certain time in order to evaporate at least 90% of the volatile components; and
d) separating the volatile components from the devolatilized polymer solution;
characterized in that
- the ratio of the whole surface used for the heat exchange, expressed in m², to the flow of the introduced polymer solution , expressed in m³/h, is higher than 80 m²/m³/h;
- the polymer solution is passed through the channels at a speed of less than 0.5 mm/second and kept in each channel for a period of time ranging from 120 to 200 seconds;
- the polymer solution is heated to a temperature at least 50 °C above the glass transition temperature (Tg) of the polymer; and
- the difference between the temperature of the heating medium and the temperature of the polymer solution leaving the channels is less than 10 °C.

This process can be carried out to adavantage by using an apparatus comprising a container equipped with an inlet pipe for the polymer solution, a drain pipe for the volatile components, an outlet pipe for the devolatilized polymer solution and a heat exchanger mounted inside the container.

The heat exchanger comprises a central zone connected to the inlet pipe for the polymer solution to be devolatilized, a plurality of channels surrounding the central zone and extending from said central zone, at which the polymer solution arrives, to the periphery of the heat exchanger and a plurality of pipes perpendicular to said channels, into which a flow of fluid heating medium having a temperature higher than the vaporization temperature of the volatile components of the polymer solution is introduced.

These channels are heated by the pipes and form the surface of thermal exchange. They are dimensioned in a way such that the ratio surface, expressed in m², to flow of the fed polymer solution, expressed in m³/h, is higher than 80 and that the residence time of the polymer solution in each channel ranges from 120 to 200 seconds at a flow rate of the solution through each channel of below 0.5 mm/second.

The vessel is enclosed in a heating jacket which keeps the inside temperature higher than the evaporation temperature of the volatile components.

A gear pump preferably is employed for discharging the devolatilized polymer from the vessel.

Any viscous polymer solution can be used in the process of the present invention. These polymer solutions generally have a viscosity in the molten state of more than 10 Ns/m² (10.000 centipoise) and preferable ranging from 10² to 10³ Ns/m² (100.000 to 1.000.000 centipoise).

The process of the present invention can be used for the devolatilization of thermoplastic polymers, silicon polymers, elastomers, lubricants having a high molecular weight and the like.

The term thermoplastic polymers, as used in the present specification and the appended claims, comprises the polymers which become plastic and flowing under the action of heat and pressure. Examples of such thermoplastic polymers include: polystyrene, impact resistant polystyrene, polyphenylene ethers, polycarbonates, polyvinyl chloride, polyurethanes, polyetherimides, polyamides, polyesters, polyacrylates and polymethacrylates, linear polyethylene, copolymers thereof, such as copolymers of styrene and acrylonitrile (ASA or SAN), styrene and methyl-methacrylate, styrene and maleic anhydride, styrene, acrylonitrile and rubber (like ABS or AES), styrene,methyl-methacrylate and rubber, and the like, as well as the blends of such polymers and copolymers, such as, for instance, polyphenylene ether/polystyrene and the like.

Highly viscous polymer solutions containing at least about 25% by weight, and preferably 40% by weight,of polystyrene or a copolymer of styrene, either alone or in admixture with other polymers, are particularly preferred in the process of the present invention.

Examples of silicon polymers are the ones corresponding to the general formula: 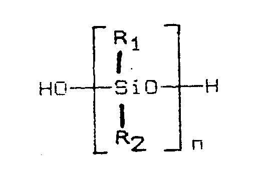
wherein R₁ and R₂ are monovalent radicals of preferably 1 to 18 carbon atoms, such as methyl, ethyl, propyl, vinyl, allyl, cyclohexyl, cyclopentyl, phenyl, methyl-phenyl and the like and n is an integer of preferably higher than 100.

Examples of elastomers include diene rubbers, such as polybutadiene, polyisoprene, butylene rubbers, polyisobutylene, ethylene-propylene rubbers and ethylene-propylene-diene (EPDM) rubbers; the homopolymers of vinyl ethers, cyclic esters, methacrylic esters, acrylonitrile and the like.

Lubricants having a high molecular weight include hydrocarbons having a boiling point ranging from 370 to 550°C,comprising n-paraffins, isoparaffins, cycloparaffins and the like.

The polymer solutions to be subjected to the devolatization process of the present invention may be polymer solutions obtained directly from the synthesis process of the polymers and may contain, besides the polymer, starting monomers or mixtures of monomers and solvents, particularly where the polymerization has been carried out in solution. Moreover said solutions may contain mixtures of polymers and/or additives and/or fillers dissolved or dispersed in the solution.

According to the process of the present invention, the polymer solution is passed through a zone of indirect thermal exchange, wherein the polymer solution is heated by a source of heat through a transfer medium, which is generally a metal.

The source of heat is generally a fluid kept at high temperature and the heat is transferred from the fluid to the polymer solution which is thus heated.

The polymer solution is heated to a temperature higher than the evaporation temperature of the volatile components and higher than the glass transition temperature (Tg) of the polymer contained in the solution. The limiting temperature is the boiling temperature of the polymer solution. It is preferred to keep the temperature of the polymer solution at least 50°C above the glass transition temperature (Tg) of the polymer. Devolatilization temperatures ranging from 100 to 400°C and preferably ranging from 150 to 350°C may generally be used, although temperatures above 300°C may cause a degradation of the polymer in certain instances. In the case of polystyrene or of mixtures containing polystyrene, the utilizable temperatures preferably range from 160 to 300°C and particularly from 180 to 280°C.

In the zone of indirect thermal exchange, the polymer solution preferably is kept under a pressure ranging from 2 to 5·10⁵ Pascal at the inlet of each channel and at a pressure below the saturation pressure of the volatile components towards the outlet of the channels.

The residence time of the polymer solution in the zone of indirect heating ranges from 120 to 200 seconds, so that at least 90% of the volatile components are eliminated in said zone. Residence times of more than 200 seconds are not recommended as they are likely to cause an undesired degradation of the polymer.

In order to ensure a rapid and efficient transfer of heat and a substantially complete removal of the volatile components from the polymer solution, the ratio surface of exchanger (expressed in m²)/flow of the polymer solution (expressed in m³/h) is kept at values of equal to or (preferably) higher than 80 and preferably up to 150; values ranging from 100 to 110 are particularly preferred.

Another parameter which allows to obtain the desired results as to substantially complete removal of the volatile components is the flow speed of the solution in the zone of indirect heating.

The polymer solution is allowed to flow through this zone very slowly and in particular at a speed below 0.5 mm/second, preferably from 0.3 to 0.4 mm/second.

The zone of indirect heat exchange comprises a plurality of channels, each of them being preferably from 50 to 150 mm long, from 1 to 3 mm high and from 10 to 30 mm wide.

Size and shape of the channels are substantially uniform, in order to ensure a regular and uniform flow of the polymer solution.

In order to ensure a rapid heat exchange in each channel and a complete removal of the volatile components, the temperature difference between the heating medium and the polymer solution at the outlet of the channels is preferably kept at or less than 10°C. Any heating medium, such as diathermic oil, electric resistances and the like, can be used to heat the surface of the channels.

At the outlet of the channels, the polymer solution is substantially free of volatile components since said components evaporate in the zone of indirect heating.

Under the conditions of the process of the present invention the evaporation is rapid and completed already inside the channels and the polymer solution that emerges from the channels is substantially free of volatile components.

The polymer solution is collected at the bottom of the vessel, whereas the volatile components are collected from the top of said vessel.

These two components can be removed by suitable means such as pumps, suction, gear pumps and the like.

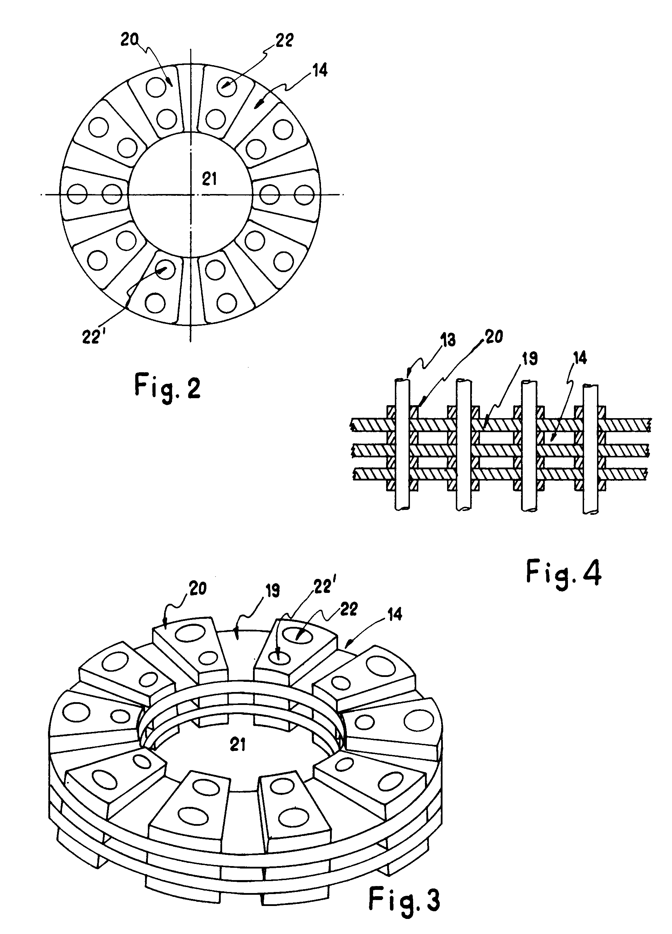

In the attached Figures 1 to 7 a few types of heat exchangers suitable for carrying out the process of the present invention are illustrated.
In particular:
- Figure 1 is a schematic longitudinal side-view of a devolatilizer according to the present invention;
- Figure 2 is a schematic view of the top of a plate of the heat exchanger contained in the devolatilizer of Figure 1;
- Figures 3 and 4 represent schematic perspective and side views, respectively of the arrangement of the plates of Figure 2;
- Figure 5 represents a view from the top of a second kind of plate which the heat exchanger contained in the devolatilizer of Figure 1 may comprise; and
- Figures 6 and 7 represent schematic perspective and side views, respectively of the arrangement of the plates of Figure 5.

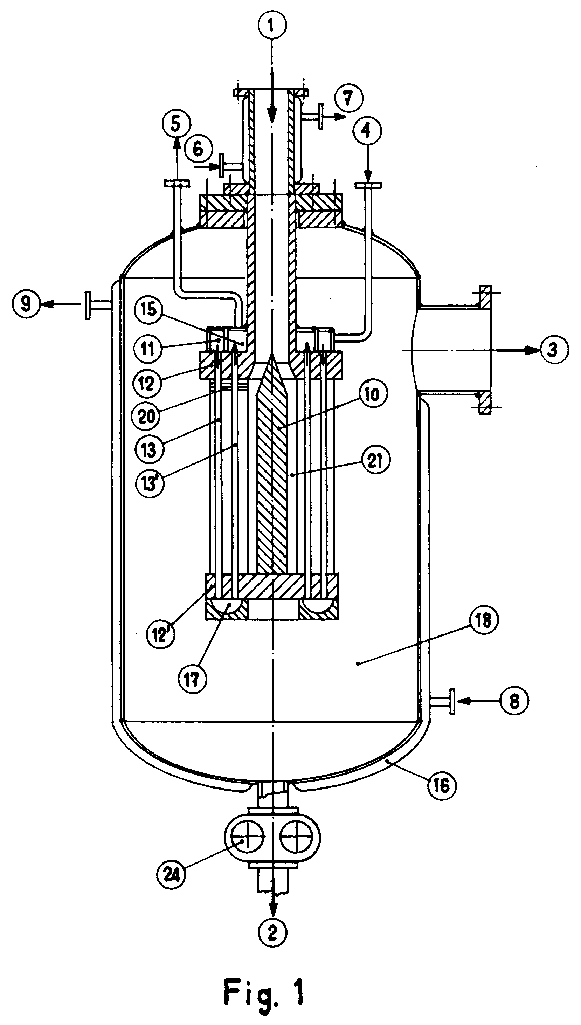

With reference to Figure 1, the devolatilizer comprises a double-walled or lined vessel 16 equipped, in the upper part, with inlet pipe 1 for the polymer solution; in the side part, with outlet pipe 3 for the volatile components; and, in the lower part, with outlet duct 2 for the devolatilized polymer solution.

Inside vessel 16 a heat exchanger is mounted, said heat exchanger comprising a central chamber 21 for receiving the polymer solution to be devolatilized, fed from inlet pipe 1. Around said central chamber 21 a series of channels 14 is arranged, extending from central chamber 21 to the periphery of the heat exchanger. The number of channels can vary within a wide range, but generally ranges from 1000 to 100.000. The channels 14 have a rectangular section and are from 50 to 150 mm long, from 1 to 3 mm high and from 10 to 30 mm wide.

Channels 14 are defined by superimposed and spaced plates 19.

A pump, not shown in the figure, forces the polymer solution to channels 14 through pipe 1 and chamber 21. In order to better distribute the polymer solution and to convey it uniformly to channels 14, spacer 10 is arranged in the middle of chamber 21. Spacer 10 can have a cylindrical, conical or frusto-conical shape.

Moreover, the heat exchanger comprises a means for heating the surfaces of thermal exchange to a temperature above the vaporization temperature of the volatile components. Said heating means comprises a first series of pipes 13, arranged at the periphery of the heat exchanger, through which the heated fluid (such as diathermic oil) coming from duct 4 through annular chamber 11 is passed. A second series of pipes 13' is arranged in the inner part of the exchanger, which pipes communicate with the first pipes in the lower part through annular chamber 17. Said pipes 13 and 13' pass through openings 22 and 22' in plates 19 and are arranged perpendicularly to the flow of the polymer solution.

Said pipes 13 and 13' are supported at their ends by two plates 12 and 12'.

In the upper part,the pipes 13, arranged in the peripheric part of the exchanger, are connected, through annular chamber 11, to pipe 4 for feeding the heating fluid; whereas pipes 13', arranged in the innermost part, are connected, through annular chamber 15, to pipe 5 for the discharge of the heating fluid.

Vessel 16 is double-walled or lined and is kept at the desired temperature by means of a heating fluid coming from pipe 8 and leaving through pipe 9.

Feeding pipe 1 is lined and kept at the desired temperature by means of a heating fluid coming from pipe 6 and leaving through pipe 7.

Pipes 13 and 13' pass through holes 22 and 22' of a plurality of plates 19 superimposed and spaced from one another by a plurality of spacers 20. In order to ensure a perfect seal and resistance of pipes 13 and 13', spacers 20 with holes wherein said pipes 13 and 13' are inserted are provided. Thus, between several superimposed plates 19 channels 14 form, which extend from the centre to the periphery of the exchanger and represent the channels for the flow of the polymer solution.

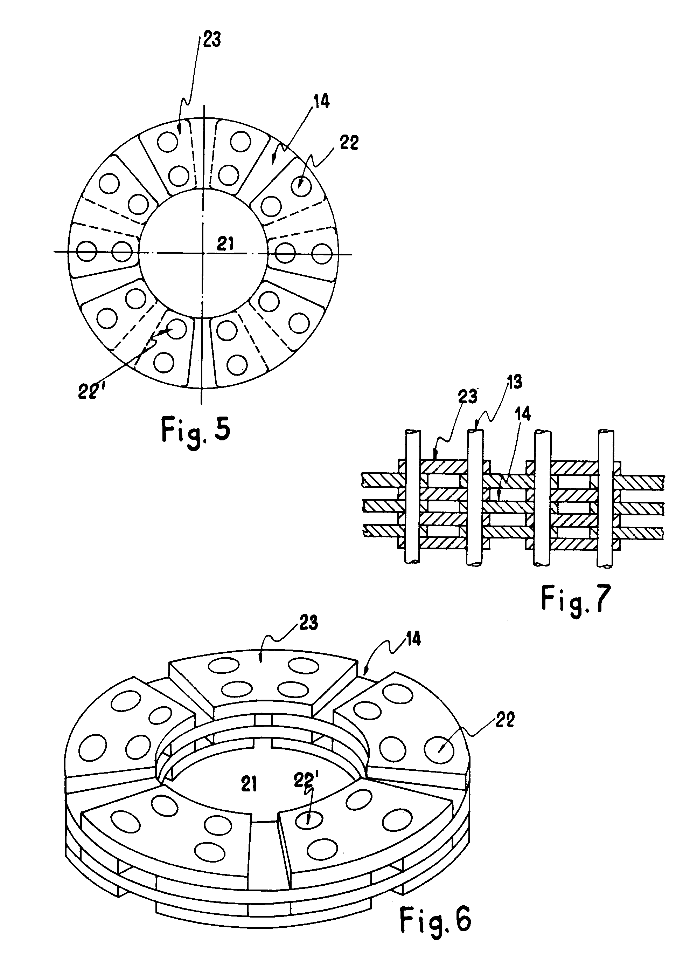

In Figures 5 to 7 an alternative embodiment is illustrated, concerning the channels for the flow of the polymer solution. In this case the plates are replaced by a plurality of blocks 23 having a rectangular or isosceles trapezium shape, drilled to accommodate two rows of adjacent pipes.

By arranging blocks 23 in a spaced way on a first layer and in a spaced or staggered way on a subsequent second layer, so that holes 22 of the superimposed blocks coincide, an annular even plate forms which plate extends around the heat exchanger. The subsequent layers are arranged in a staggered way with respect to the lower layer, in order to form channels 14 extending from the centre to the periphery of the heat exchanger, as illustrated in Figures 6 and 7.

The even plate heat exchanger may be manufactured according to known techniques, such as molding and welding. As far as the ducts for the heating fluid are concerned, it is preferred to first assemble the plates or the blocks and the pipes and to subsequently fasten the whole assembly either by hydraulic or by pneumatic expansion of the pipes. In this way a perfect contact metal-metal is obtained.

The operation of the devolatizer illustrated in Figure 1 is carried out as follows:
The polymer solution to be treated is introduced into pipe 1 through a dosage pump and is conveyed to central chamber 21. From this chamber the solution passes through channels 14, emerges from the end of these channels, falls into the inside 18 of vessel 16 and is discharged at the end of said vessel through duct 2 by means of gear pump 24. The heating fluid of a suitable temperature is fed through duct 4, passes through annular chamber 11, pipes 13, annular chamber 17, pipes 13' and chamber 15 and leaves through duct 5. Vessel 16 is heated by passing a heating fluid coming in from duct 8 and leaving through duct 9. The volatile components are removed through duct 3.

The following examples are given in order to better illustrate the present invention without, however, being a limitation thereof.

### EXAMPLE 1

In this example the devolatizer of Figure 1 was used. The exchanger comprised 1700 channels, each of which being on the average 16 mm wide, 55 mm long and 1 mm high. The channels were obtained by using blocks having an isosceles trapezium shape superimposed in several layers, spaced in each layer.

The oil was heated to 250-300°C and allowed to flow through the pipes.

A vacuum pump was used to remove the volatile components and a gear pump was mounted at the end of the vessel to collect the devolatilized polymer solution.

A polymer solution containing 50% by weight of polystyrene, 10% of ethyl-benzene and 40% of monomeric styrene was introduced, at a flow of 30 l/h, into the devolatilizer at a temperature of about 120°C and at a pressure at the inlet of about 2·10⁵ Pascal.

The devolatilizer was kept at a residual pressure of 2·10³ Pascal and was heated by circulation of a diathermic oil kept at a temperature of 250°C.

The temperature of the polymer leaving the devolatilizer was about 245°C.

The ratio surface of thermal exchange of the channels/fed polymer solution was 106 m²/m³/h.

The speed of the solution in each channel was 0.3 mm/second. The residence time was about 181 seconds.

The polymer leaving the devolatilizer had the following characteristics:

| | |
|---|---|
| - residual monomeric styrene: | < 400 ppm |
| - total volatile components: | < 500 ppm |

### EXAMPLE 2

A polymer solution consisting of about 50% by weight of a styrene-acrylonitrile copolymer (75-25% by weight), 20% by weight of ethyl-benzene, 22.5% by weight of monomeric styrene and 7.5% by weight of acrylonitrile was introduced, at a flow rate of about 30 l/h, into the devolatilizer of example 1.

The temperature at the inlet was about 120°C and the pressure was about 2·10⁵ Pascal.

The devolatilizer was kept at a residual pressure of 2.10³ Pascal and was heated by circulation of a diathermic oil kept at a temperature of about 230°C.

The temperature of the polymer at the outlet was about 225°C. The ratio surface of thermal exchange/fed polymer solution and the flow rate in the channel were equal to the ones of example 1.

The polymer solution leaving the devolatilizer had the following characteristics:

| | |
|---|---|
| - residual monomeric styrene: | < 500 ppm |
| - residual monomeric acrylonitrile: | < 20 ppm |
| - total volatile components: | < 600 ppm. |

### EXAMPLE 3

A polymer solution consisting of 60% by weight of a styrenemethyl methacrylate copolymer (55-45% by weight), 20% by weight of ethyl-benzene and 20% by weight of a mixture of styrene and methyl methacrylate monomers in a ratio by weight of 55/45, was introduced at a flow of about 30 l/h, into the devolatilizer of example 1. The temperature of the solution at the inlet was about 120°C and the pressure was about 2·10⁵ Pascal.

The devolatilizer was kept at a residual pressure of 2·10³ Pascal and heated by circulation of a diathermic oil kept at a temperature of 230°C.

The temperature of the polymer at the outlet was about 225°C.

The polymer leaving the devolatilizer had the following characteristics:

| | |
|---|---|
| - residual monomeric styrene: | < 400 ppm |
| - residual monomeric methyl methacrylate: | < 20 ppm |
| - total volatile components: | <500 ppm |

### EXAMPLE 4

A polymer solution consisting of 65% by weight of polymethylmethacrylate, 20% by weight of butyl acetate and 15% by weight of monomeric methyl methacrylate was introduced, at a flow of about 30 l/h,into the devolatilizer of example 1. The temperature of the solution at the inlet was 120°C and its pressure was 4·10⁵ Pascal.

The devolatilizer was kept at a residual pressure of 13.10³ Pascal and was heated by circulation of a diathermic oil kept at a temperature of 230°C.

The temperature of the polymer leaving the devolatilizer was about 225°C.

The polymer leaving the apparatus had the following characteristics:

| | |
|---|---|
| - residual monomeric methyl-methacrylate: | < 1000 ppm |
| - total volatile components: | < 2000 ppm |

### EXAMPLE 5

A polymer solution consisting of 50% by weight of styrenemaleic anhydride copolymer (85/15% by weight), 20% by weight of cyclohexanone and 30% by weight of monomeric styrene was introduced, at a flow of 30 l/h,into the devolatilizer of example 1. The temperature of the solution at the inlet was 110°C and its pressure was about 2·10⁵ Pascal.

The devolatilizer was kept at a residual pressure of 2·10³ Pascal and heated by circulation of a diathermic oil kept at a temperature of about 230°C.

The temperature of the polymer leaving the devolatilizer was about 225°C.

The polymer leaving the apparatus had the following characteristics:

| | |
|---|---|
| - residual monomeric styrene: | < 500 ppm |
| - total volatile components: | <600 ppm |

### EXAMPLE 6

A polymer solution consisting of 70% by weight of styreneacrylonitrile-polybutadiene copolymer (87.5-22.5-10% by weight), 20% by weight of ethyl-benzene and 10% by weight of a mixture of monomeric styrene and acrylonitrile in a ratio by weight of 75/25, was introduced, at a flow of about 30 l/h,into the devolatilizer of example 1. The temperature of the solution at the inlet was 150°C and its pressure was about 3·10⁵ Pascal.

The devolatilizer was kept at a residual pressure of about 2·10³ Pascal and heated by circulation of a diathermic oil kept at a temperature of about 250°C.

The temperature of the polymer leaving the devolatilizer was about 245°C.

The polymer leaving the apparatus had the following characteristics:

| | |
|---|---|
| - residual monomeric styrene: | <500 ppm |
| - residual monomeric acrylonitrile: | < 20 ppm |
| - total volatile components: | <600 ppm |

### EXAMPLE 7

A polymer solution consisting of about 40% by weight of polycarbonate and about 60% by weight of chlorobenzene, was introduced, at a flow of about 30 l/h, into the devolatilizer of example 1. The temperature of the solution at the inlet was 120°C and its pressure was about 3·10⁵ Pascal.

The devolatilizer was kept at a residual pressure of about 2·10³ Pascal and heated by circulation of a diathermic oil kept at a temperature of about 295°C.

The temperature of the polymer leaving the devolatilizer was about 290°C.

The content in residual solvent in the polymer at the outlet was below 500 ppm.

### EXAMPLE 8

A polymer solution consisting of about 40% by weight of polyphenylene oxide-polystyrene alloy (50/50 by weight) and of about 60% by weight of toluene was introduced, at a flow of 30 l/h, into the devolatilizer of example 1. The temperature of the solution at the inlet was 120°C and its pressure was about 3·10⁵ Pascal.

The devolatilizer was kept at a residual pressure of about 13·10³ Pascal and heated by circulation of a diathermic oil kept at a temperature of about 295°C.

The temperature of the polymer leaving the devolatilizer was 295°C.

The content in residual solvent in the polymer at the outlet was below 1000 ppm.

### EXAMPLE 9

A solution consisting of 65% by weight of linear low density polyethylene (LLDPE) and 35% by weight of cyclohexanone was introduced, at a flow of 30 l/h, into the devolatilizer of example 1. The temperature of the solution at the inlet was 170°C and the pressure was about 3·10⁵ Pascal.

The devolatilizer was kept at a residual pressure of about 2·10³ Pascal and was heated by circulation of a diathermic oil kept at a temperature of 250°C.

The temperature of the polymer leaving the devolatilizer was 245°C.

The content in residual solvent in the polymer leaving the devolatilizer was below 10 ppm.

### EXAMPLE 10

A solution consisting of 65% by weight of high density polyethylene (HDPE) and 35% by weight of cyclohexanone was introduced, at a flow of 30 l/h, into the devolatilizer of example 1. The temperature of the solution at the inlet was 170°C and the pressure was about 3·10⁵ Pascal.

The devolatilizer was kept at a residual pressure of about 2·10³ Pascal and was heated by circulation of a diathermic oil kept at a temperature of about 250°C.

The temperature of the polymer leaving the devolatilizer was 245°C.

The content in residual solvent in the polymer leaving the devolatilizer was below 10 ppm.

## Claims

1. Process for the devolatilization of polymer solutions, comprising the steps of:
a) feeding the polymer solution through a zone of indirect heat exchange, said zone comprising a plurality of parallel channels heated to a temperature higher than the vaporization temperature of the volatile components and up to the boiling point of the solution;
b) passing the polymer solution through each channel;
c) keeping the polymer solution in each channel for a certain time in order to evaporate at least 90% of the volatile components; and
d) separating the volatile components from the devolatilized polymer solution;
characterized in that
- the ratio of the whole surface used for the heat exchange, expressed in m², to the flow of the introduced polymer solution , expressed in m³/h, is higher than 80 m²/m³/h;
- the polymer solution is passed through the channels at a speed of less than 0.5 mm/second and kept in each channel for a period of time ranging from 120 to 200 seconds;
- the polymer solution is heated to a temperature at least 50 °C above the glass transition temperature (Tg) of the polymer; and
- the difference between the temperature of the heating medium and the temperature of the polymer solution leaving the channels is less than 10 °C.

2. Process according to claim 1, wherein the solution of polymers has a viscosity, in the molten state, of more than 10 Ns/m² (10.000 centipoise) and preferably of from 10² Ns/m² to 10³ Ns/m² (100.000 to 1.000.000 centipoise).

3. Process according to any one of claims 1 or 2, wherein the polymer is selected from thermoplastic polymers, silicon polymers, elastomers and lubricants having a high molecular weight, the thermoplastic polymer preferably being selected from polystyrene, impact resistant polystyrene, polyphenylene ethers, polycarbonates, polyvinyl chloride, polyurethanes, polyetherimides, polyamides, polyesters, polyacrylates and polymethacrylates, linear polyethylene, copolymers thereof and blends of such polymers and copolymers, and in particular being selected from styrene/acrylonitrile, styrene/methyl methacrylate, styrene/maleic anhydride and styrene/acrylonitrile/rubber copolymers.

4. Process according to claim 3, wherein the polymer is a mixture of polyphenylene ether and polystyrene.

5. Process according to any one of the preceeding claims, wherein the polymer solution contains at least 25 % by weight, and preferably at least 40 % by weight, of polystyrene or a styrene copolymer, either alone or in combination with other polymers.

6. Process to any one of the preceeding claims, wherein the temperature of the polymer solution ranges from 100 to 400 °C, preferably from 150 to 350 °C.

7. Process according to any one of the preceeding claims, wherein the pressure of the polymer solution at the channel inlet ranges from 2 to 5·10⁵ Pascal, and preferably is lower than the saturation pressure of the volatile components towards the channel outlet.

8. Process according to any one of the preceeding claims, wherein the flow speed of the polymer solution in each channel ranges from 0.3 to 0.4 mm/second.

9. Process according to any one of the preceeding claims, wherein the ratio of the heat exchanger surface to the flow of the polymer solution ranges from 80 to 150, preferably from 100 to 110,m²/m³/h.

10. Process according to any one of the preceeding claims, wherein the heat exchange zone comprises from 1.000 to 100.000 channels, each channel being from 50 to 150 mm long, from 1 to 3 mm high and from 10 to 30 mm wide.

## Patentansprüche

1. Verfahren zum Entgasen von Polymerlösungen, das die Schritte umfaßt:
a) Zuführen einer Polymerlösung durch eine Zone indirekten Wärmeaustausches, wobei die Zone eine Vielzahl paralleler Kanäle umfaßt, die auf eine Temperatur über der Verdampfungstemperatur der flüchtigen Komponenten und bis zur Siedetemperatur der Lösung erhitzt sind,
b) Durchleiten der Lösung durch alle Kanäle,
c) Belassen der Polymerlösung in den Kanälen für eine gewisse Zeit, um mindestens 90 % der flüchtigen Komponenten zu verdampfen und
d) Abtrennen der flüchtigen Komponenten von der entgasten Polymerlösung,
dadurch gekennzeichnet, daß
- das Verhältnis von gesamter zum Wärmeaustausch genutzter Oberfläche, ausgedrückt in m², zum Fluß der eingeführten Polymerlösung, ausgedrückt in m³/h, größer als 80 m²/m³/h ist,
- die Polymerlösung durch die Kanäle mit einer Geschwindigkeit unter 0.5 mm/s durchgeleitet und in jedem Kanal für eine Zeitdauer von 120 bis 200 s belassen wird,
- die Polymerlösung auf eine Temperatur von mindestens 50 °C über der Glasübergangstemperatur (Tg) des Polymers erhitzt wird und
- die Differenz zwischen der Temperatur des Erhitzungsmediums und der Temperatur der die Kanäle verlassenden Polymerlösung geringer als 10 °C ist.

2. Verfahren nach Anspruch 1, worin die Lösung der Polymere eine Viskosität im geschmolzenen Zustand von über 10 Ns/m² (10.000 Centipoise) und vorzugsweise von 10² Ns/m² bis 10³ Ns/m² (100.000 bis 1.000.000 Centipoise) besitzt.

3. Verfahren nach irgendeinem der Ansprüche 1 oder 2, worin das Polymer ausgewählt ist aus thermoplastischen Polymeren, Siliconpolymeren, Elastomeren und Schmiermitteln hohen Molekulargewichts, wobei das thermoplastische Polymer vorzugsweise ausgewählt ist aus Polystyrol, schlagfestem Polystyrol, Polyphenylenethern, Polycarbonaten, Polyvinylchlorid, Polyurethanen, Polyetherimiden, Polyamiden, Polyestern, Polyacrylaten und Polymethacrylaten, linearem Polyethylen, deren Copolymeren und Mischungen solcher Polymere und Copolymere und insbesondere ausgewählt ist aus Styrol/Acrylnitril-, Styrol/Methylmethacrylat-, Styrol/Maleinsäureanhydrid- und Styrol/Acrylnitril/Kautschuk-Copolymeren.

4. Verfahren gemäß Anspruch 3, worin das Polymer eine Mischung von Polyphenylenether und Polystyrol ist.

5. Verfahren gemäß irgendeinem der vorhergehenden Ansprüche, worin die Polymerlösung mindestens 25 Gew.-% und vorzugsweise mindestens 40 Gew.-% Polystyrol oder ein Polystyrol-Copolymer, entweder allein oder kombiniert mit anderen Polymeren, enthält.

6. Verfahren nach irgendeinem der vorhergehenden Ansprüche, worin die Temperatur der Polymerlösung im Bereich von 100 bis 400 °C, vorzugsweise von 150 bis 350 °C, liegt.

7. Verfahren nach irgendeinem der vorhergehenden Ansprüche, worin der Druck der Polymerlösung beim Kanaleinlaß im Bereich von 2 bis 5 · 10⁵ Pascal liegt und in Richtung des Kanalauslasses vorzugsweise niedriger als der Sättigungsdruck der flüchtigen Komponenten ist.

8. Verfahren nach irgendeinem der vorhergehenden Ansprüche, worin die Fließgeschwindigkeit der Polymerlösung in jedem Kanal im Bereich von 0.3 bis 0.4 mm/s liegt.

9. Verfahren gemäß irgendeinem der vorhergehenden Ansprüche, worin das Verhältnis von Wärmeaustauscheroberfläche zum Fluß der Polymerlösung im Bereich von 80 bis 150, vorzugsweise von 100 bis 110, m²/m³/h liegt.

10. Verfahren nach irgendeinem der vorhergehenden Ansprüche, worin die Wärmeaustauscherzone 1000 bis 100.000 Kanäle umfaßt, wobei jeder Kanal 50 bis 150 mm lang, 1 bis 3 nun hoch und 10 bis 30 mm breit ist.

## Revendications

1. Procédé de dégazage de solutions polymères comprenant les étapes suivantes:
a) on introduit la solution polymère à travers une zone d'échange de chaleur indirecte, cette zone comprenant une pluralité de canaux parallèles chauffés à une température supérieure à la température de vaporisation des composants volatils et allant jusqu'au point d'ébullition de la solution;
b) on fait passer la solution polymère à travers chaque canal;
c) on maintient la solution polymère dans chaque canal pendant un certain temps en vue d'évaporer au moins 90% des composants volatils; et
d) on sépare les composants volatils de la solution polymère dégazée;
caractérisé en ce que:
- le rapport de la surface totale utilisée pour l'échange de chaleur, exprimé en m², au débit de la solution polymère introduite, exprimé en m³/h, est supérieur à 80 m²/m³/h;
- on fait passer la solution polymère à travers les canaux à une vitesse inférieure à 0,5 mm/seconde et on la maintient dans chaque canal pendant une période de temps comprise entre 120 et 200 secondes;
- on chauffe la solution polymère à une température d'au moins 50°C supérieure à la température de transition vitreuse (Tg) du polymère; et
- la différence entre la température du milieu de chauffage et la température de la solution polymère quittant les canaux est inférieure à 10°C.

2. Procédé selon la revendication 1, caractérisé en ce que la solution de polymères a une densité à l'état fondu supérieure à 10 Ns/m² (10 000 centipoises) et de préférence comprise entre 10² Ns/m² et 10³ Ns/m² (100 000 et 1 000 000 de centipoises).

3. Procédé selon l'une quelconque des revendications 1 à 2, caractérisé en ce que le polymère est choisi parmi les polymères thermoplastiques, polymères de silicone, élastomères et lubrifiants de poids moléculaire élevé, le polymère thermoplastique étant de préférence choisi parmi: polystyrène, polystyrène résistant aux chocs, polyphénylènéthers, polycarbonates, chlorure de polyvinyle, polyuréthanes, polyéthérimides, polyamides, polyesters, polyacrylates et polyméthacrylates, polyéthylène linéaire, leurs copolymères et des mélanges de ces polymères et copolymères que l'on choisit et sont en particulier parmi les copolymères styrène/acrylonitrile, styrène/méthacrylate de méthyle, styrène/anhydride maléique et caoutchouc/styrène/acrylonitrile.

4. Procédé selon la revendication 3, caractérisé en ce que le polymère est un mélange de polyphénylènéther et de polystyrène.

5. Procédé selon l'une quelconque des revendications précédentes, caractérisé en ce que la solution polymère contient au moins 25% en poids et de préférence au moins 40% en poids de polystyrène ou d'un copolymère de styrène, soit seul, soit en association avec d'autres polymères.

6. Procédé selon l'une quelconque des revendications précédentes, caractérisé en ce que la température de la solution polymère est comprise entre 100 et 400°C, de préférence entre 150° et 350°C.

7. Procédé selon l'une quelconque des revendications précédentes, caractérisé en ce que la pression de la solution polymère à l'entrée du canal est comprise entre 2 et 5.10⁵ Pascal et qu'elle est de préférence inférieure à la pression de saturation des composants volatils vers la sortie du canal.

8. Procédé selon l'une quelconque des revendications précédentes, caractérisé en ce que la vitesse d'écoulement de la solution polymère dans chaque canal est comprise entre 0,3 et 0,4 mm/seconde.

9. Procédé selon l'une quelconque des revendications précédentes, caractérisé en ce que le rapport de la surface l'échangeur de chaleur au débit de la solution polymère est compris entre 80 et 150 et, de préférence, entre 100 et 110 m²/m³/h.

10. Procédé selon l'une quelconque des revendications précédentes, caractérisé en ce que la zone d'échange de chaleur comprend de 1000 à 100 000 canaux, chaque canal ayant une longueur de 50 à 150 mm, une hauteur de 1 à 3 mm et une largeur de 10 à 30 mm.
